# EUROPÄISCHE PATENTSCHRIFT

(11) **EP 4 429 866 B1**
(45) Veröffentlichungstag und Bekanntmachung des Hinweises auf die Patenterteilung: **01.10.2025**
(21) Anmeldenummer: 22829666.1
(22) Anmeldetag: 04.11.2022
(51) Int. Cl.: B29C 45/60, B29C 45/62, B29C 45/74, B29C 48/505, B29C 48/68, H05B 3/40, B29C 48/84

(54) **TEMPERIERVORRICHTUNG FÜR EINE PLASTIFIZIERSCHNECKE EINER PLASTIFIZIEREINHEIT**
TEMPERATURE CONTROL DEVICE FOR A PLASTICISING SCREW OF A PLASTICISING UNIT
DISPOSITIF DE RÉGULATION DE TEMPÉRATURE POUR UNE VIS DE PLASTIFICATION D'UNE UNITÉ DE PLASTIFICATION

(30) Priorität: 08.11.2021 DE 102021129015
(43) Veröffentlichungstag der Anmeldung: 18.09.2024
(73) Patentinhaber: Smart Plastify GmbH, 57368 Lennestadt (DE)
(72) Erfinder: Pütter, Sebastian, 57368 Lennestadt - Kirchveischede (DE)
(74) Vertreter: Limbeck, Achim
(86) Internationale Anmeldenummer: PCT/DE2022/100814
(87) Internationale Veröffentlichungsnummer: WO 2023/078506

(56) Entgegenhaltungen:
- CN-A- 111 844 611
- CN-B- 107 053 624
- CN-U- 207 901 523
- DE-A1- 3 603 500
- DE-T2- 3 889 410
- DE-T2- 60 127 679
- JP-A- 2004 188 601
- JP-A- 2004 219 032
- KR-A- 20050 095 728

## Beschreibung

### Technisches Gebiet

Die vorliegende Erfindung betrifft eine Plastifizierschnecke mit einer Temperiervorrichtung gemäß Patentanspruch 1.

### Stand der Technik

Ein Plastifizierzylinder einer Spritzguss- oder Extrusionsmaschine besteht nach heutigem Stand der Technik aus einem einteiligen Bauteil. Es handelt sich dabei um ein Zylinderrohr aus Stahl, welches je nach zu verarbeitendem Material und Verschleißanspruch aus verschiedenen Materialgüten bestehen kann. So reichen die Ausführungen von gehärteten Stählen über Nitrierstähle bis hin zu geschleuderten Bimetallzylindern für die Verarbeitung von besonders abrasiven Kunststoffmaterialien. Die konventionelle Beheizung des Plastifizierzylinders erfolgt dabei mittels Keramikheizbändern die kraftschlüssig um den Plastifizierzylinder gespannt werden (siehe auch DE102012112747A1).

In einer anderen technischen Lösung kommen anstelle der Keramikheizbänder so genannte Heizschlangen zum Einsatz. Dazu besitzt der Plastifizierzylinder über seine Länge labyrinthartige Nuten in denen viereckige Heizschlangen eingelegt werden. Der Vorteil dieser Lösung liegt dabei in einer näheren Positionierung der Heizung am Schmelzekanal und damit einhergehend schnelleren Erreichen der Prozesstemperatur. Vorteilhaft ist hier die größere Anlagefläche der Heizschlange, da diese nicht nur eine Kontaktfläche am Zylinderdurchmesser hat, sondern durch den im Plastifizierzylinder integrierten Einbau auch zwei seitliche Kontaktflächen zum Plastifizierzylinder hat (siehe auch DE102018112939A1).

In der WO2010056281A1 ist eine weitere Lösung zum Beheizen von Plastifizierzylindern beschrieben. Hierbei wird der Plastifizierzylinder mit einer plasmagespritzten, metallisierten Keramikoberfläche beschichtet und kann dadurch elektrisch beheizt werden.

Aus Internetberichten sind zudem Lösungen bekannt die anstelle einer elektrischen Beheizung auf eine Gasbeheizung mittels Erdgasringelemente zurückgreift (siehe z.B. Krauss-Maffei Kunststofftechnik GmbH, München) - ein Patent hierzu konnte nicht gefunden werden.

Bei vernetzbaren Kunststoffen wird auf Flüssigkeitstemperierungen (Bohrungen im Plastifizierzylinder und ggf. Einsatz von Wärmeleitpatronen oder Rohrschlangen um den Plastifizierzylinder) zurückgegriffen - diese sind z.B. beschrieben in DE3139024A1 oder DE202014005708U1.

Während für Plastifizierschnecken im Spritzguss bislang oft ein einteiliger Aufbau aus massivem Stahl und ohne Heizmöglichkeiten gewählt wird, kommen im Extrusionsbereich anwendungsspezifisch innenbeheizte Plastifizierschnecken zum Einsatz. Die Beheizung der Plastifizierschnecke erfolgt hierbei durch innenliegende Wärmeleitrohre oder Wendelkörper wie sie beispielsweise im Patent DE10013474A1 beschrieben sind.

Der wesentliche Nachteil der bekannten Lösungen liegt in einem schlechten Wirkungsgrad des Systems. So ergibt sich durch die Außenbeheizung und dem dickwandige Plastifizierzylinder ein hoher Wärmeübertragungsmoment. Die Temperaturregelung kann nur sehr träge erfolgen und reagiert auf Systemdriften zu langsam. Diese Trägheit ergibt sich ebenso beim Aufheizen des Plastifizierzylinders, da hier zunächst die Masse (Wandstärke) des Zylinders durchgeheizt werden muss. Durch die außenliegende Montage der Heizelemente wird zudem ein erhebliches Maß an Abwärme an die Umgebung abgestrahlt und gelangt nicht wie gewünscht ins Innere des Plastifzierzylinders. Die segmentierte Anordnung der außenliegenden Heizelemente führt zu Wärmebrücken und somit zu einer inhomogenen Wärmeverteilung - bauartbedingt kann kein lückenloser Kontakt von zwei Heizelementen erreicht werden.

In Havariefällen kommt es durch Undichtigkeiten zwischen der Düse der Plastifiziereinheit und der Werkzeugdüse zu Leckagen. Diese Leckagen führen zu Überspritzungen der außenliegenden Heizbänder durch geschmolzenes Kunststoffmaterial - in diesen Fällen bleibt nur noch der Austausch der Heizbänder.

Verarbeitungstechnische Nachteile ergeben sich durch den Umstand, dass das Aufschmelzen des Kunststoffgranulates nur von außen stattfindet (das Kunststoffgranulat schmilzt an der Zylinderinnenwand) und erfordert dementsprechend höhere Aufschmelzzeiten. Um diese Aufschmelzzeit zu reduzieren, wird häufig mit einem höheren Staudruck und schnellerer Schneckendrehzahl gearbeitet - allerdings ergeben diese beiden Parameter auch einen höheren Verschleiß an der Antriebseinheit der Schnecke und eine höhere erforderliche Antriebsleistung = Stromverbrauch. Darüber hinaus werden zur Erreichung kurzmöglichster Aufschmelzzeiten auch Temperaturen oberhalb der zulässigen Verarbeitungstemperatur gewählt. Die höhere Schmelzetemperatur durch vorstehende Punkte bedeutet allerdings auch eine höhere Artikeltemperatur, die eine beschädigungsfreie Entformung selten ermöglicht. Aus diesem Grund muss das Fertigteil vor der Entformung eine längere Kühlzeit erfahren und verlängert somit die Zykluszeit.

Bei Material- und Farbwechseln kommt es häufig zu Ablagerungen auf der nicht temperierten Plastifizierschnecke die dann ein aufwendiges Reinigungsverfahren mittels chemischer oder physikalischer Reiniger erforderlich machen, um die Anhaftungen an der kälteren Plastifizierschnecke zu lösen.

Aus der CN 111844611 A ist eine Vorrichtung zum Spritzgießen bekannt, die eine Temperiervorrichtung für einen Plastifizierzylinder einer Plastifiziereinheit umfasst, wobei der Plastifizierzylinder aus einem Hohlzylinder gebildet ist, in dessen zentralen Hohlraum die Temperiervorrichtung zum Temperieren des Plastifizierzylinders aufgenommen ist, wobei die Temperiervorrichtung aus einem Innenzylinder zur Aufnahme in dem Hohlzylinder gebildet ist, auf dessen außenseitigen Mantelfläche wenigstens ein flächig ausgebildetes Heizelement angeordnet oder aufgebracht ist.

In der DE 36 03 500 A1, der DE 601 27 679 T2 und in der DE 38 89 410 T2 sind Heizvorrichtungen für einen Plastifizierzylinder beschrieben, bei denen der Plastifizierzylinder aus einem Innenzylinder besteht, auf dessen wenigstens einen Mantelfläche ein flächig ausgebildetes Heizelement angeordnet ist. Die Temperiervorrichtung ist in dem Plastifizierzylinder, der als Hohlzylinder ausgebildet ist, aufgenommen.

Die KR 2005 0095728 A offenbart eine Spritzgießmaschine mit einer Plastifizierschnecke, die als Hohlschnecke ausgeführt ist, wobei Heizelemente an der Innenseite der Hohlschnecke angeordnet sind. Innerhalb der Heizelemente verläuft in axialer Richtung ein Kabel, das nach außen durch einen Schleifkontakt mit einer Stromquelle verbunden ist. Die CN 107 053 624 B offenbart eine Spritzgießmaschine mit einer Plastifizierschnecke, die als Hohlschnecke ausgeführt ist und in der eine elektrische Heizröhre in axialer Richtung angeordnet ist, wobei zwischen der Innenwand der Hohlschnecke und der äußeren Mantelfläche des elektrischen Heizrohrs ein Hohlraum gebildet ist, der mit einem Medium zur Wärmeübertragung gefüllt ist.

Aus der CN 207 901 523 U ist eine Spritzgießmaschine mit einer Heizeinrichtung bekannt, bei der ein Heizelement in das Innere der Pastifizierschnecke eingelassen und mit ihr verbunden ist. Die JP 2004 188601 A beschreibt ebenfalls eine Spritzgießmaschine mit einer Plastifizierschnecke, wobei diese von innen mittels Heizpatronen beheizt werden kann. Die JP 2004 219032 A zeigt eine Förder- und Heizvorrichtung für pulverförmiges bzw. körniges Material, z.B. Reiskleie, bei der eine Dünnschichtheizung an der Innenseite einer Schneckenwelle angebracht werden kann.

### Darstellung der Erfindung

Der vorliegenden Erfindung liegt die Aufgabe zugrunde, die vorgenannten Nachteile zu beseitigen.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Plastifizierschnecke sind in den abhängigen Unteransprüchen angegeben.

### Kurzbeschreibung der Zeichnungen

Weitere Ziele, Merkmale, Vorteile und Anwendungsmöglichkeiten der erfindungsgemäßen Plastifizierschnecke ergeben sich aus der nachfolgenden Beschreibung von Ausführungsbeispielen anhand der Zeichnungen.

In den Zeichnungen zeigen
Fig. 1 die erfindungsgemäße Plastifizierschnecke in einer vorteilhaften Ausführungsform in der Ansicht;
Fig. 2 die erfindungsgemäße Plastifizierschnecke in einer weiteren, vorteilhaften Ausführungsform in der Seitenansicht.

### Ausführung der Erfindung

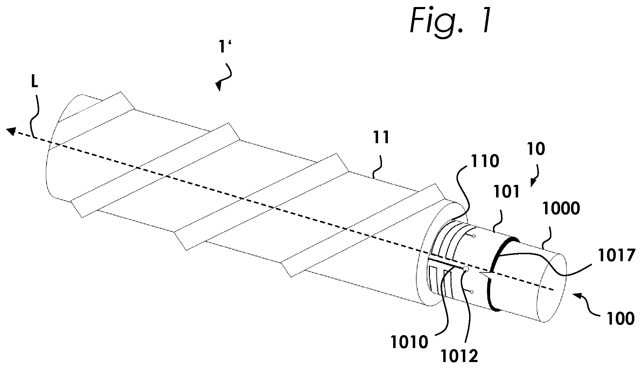

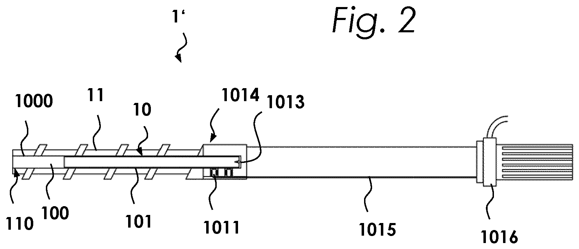

Wie aus Fig. 1 und aus Fig. 2 ersichtlich, ist die erfindungsgemäße Plastifizierschnecke 1' aus einem Hohlzylinder 11 gebildet, in dessen zentralen Hohlraum 110 die Temperiervorrichtung 10 zum Temperieren der Plastifizierschnecke 1' aufgenommen ist.

Die Temperiervorrichtung 10 ist aus einem Innenzylinder 100 zur Aufnahme in dem Hohlzylinder 11 gebildet, auf dessen außenseitigen Mantelfläche 1000 wenigstens ein flächig ausgebildetes Heizelement 101 aufgebracht ist, wobei das flächig ausgebildete Heizelement 101 aus einer Hülse 1017 gebildet ist, die auf der außenseitigen Mantelfläche 1000 des Innenzylinders aufgebracht ist.

In einer besonders vorteilhaften Ausführungsform der Erfindung umfasst das mindestens eine flächig ausgebildete Heizelement 101 mindestens einen elektrischen Widerstands-Heizleiter zum Umwandeln elektrischer Energie in Wärme mit wenigstens zwei elektrischen Anschlüssen 1011, die in einem Anschlussbereich kontaktierbar sind.

Das mindestens eine flächenförmige Heizelement 101 ist dabei vorzugsweise als Dickschichtheizer ausgebildet.

Die Plastifizierschnecke 1' gemäß Fig. 1 ist innen hohl ausgeformt und bietet somit die Möglichkeit zur Aufnahme der zylinderförmigen Temperiervorrichtung 10. Diese Temperiervorrichtung 10 besteht vorzugsweise aus einem wärmeleitfähigen Innenzylinder 100 und einer Hülse 1017 aus Stahl oder Keramik. Sofern es sich bei der Hülse 1017 oder dem Innenzylinder 100 um ein elektrisch leitendes Material handelt, wird zunächst eine vollflächige Dielektrikumsschicht auf die Mantelfläche der Hülse 1017 oder den Innenzylinder 100 aufgebracht. Anschließend erfolgt der Siebdruck einer vorzugsweise mäanderförmigen Heizstruktur des Heizelements 101 auf der Hülse 1017 oder den Innenzylinder 100. Die Kontaktierung des Heizelementes 101 erfolgt über den Anfangs- und Endpunkt der aufgedruckten Widerstandsheizung an einem Stirnende der Hülse 1017 oder des Innenzylinders 100.

Abschließend wird zur erneuten Isolierung und zum Schutz vor mechanischen Einflüssen eine zweite vollflächige Dielektrikums- bzw. Abdeckschicht aufgedruckt. Zur Positionsgenauigkeit der einzelnen Druckschichten verfügt die Hülse 1017 oder der Innenzylinder 100 an einer Stirnseite über eine kleine Passerung, um diese in der Rundsiebdruckmaschine einfacher justieren zu können. Der Innendurchmesser der Hülse 1017 mit Dickschichtheizung entspricht dabei den passgenauen Außendurchmesser des Innenzylinders 100, so dass diese bei Raumtemperatur formschlüssig aufgeschoben werden kann. Der Innenzylinder 100 besitzt dabei einseitig einen Bund der dem Innendurchmesser der Plastifizierschnecke 1' entspricht. Dieser sichert die korrekte Position der Hülse 1017 und stellt hierfür einen Anschlag dar. Um ein Verrutschen der Hülse 1017 zu vermeiden, wird diese am anderen Ende des Innenzylindermit einem Sicherungsstift 1013 gesichert. Die Hülse 1017 wird somit zwischen einem Bund des Innenzylinders, einem Sicherungsstift und dem Außendurchmesser des Innenzylinders 100 formschlüssig positioniert. Die auf den Innenzylinder 100 montierte Hülse 1017 wird nun bei Raumtemperatur formschlüssig in die Plastifizierschnecke 1' bis zu einem definierten Anschlag eingeschoben. Die positionsgerechte und gesicherte Lage der montierten Hülse 1017 mit Dickschichtheizer auf dem Innenzylindermaterial wird innerhalb der Plastifizierschnecke durch eine Madenschraube oder eingeschraubter Schneckenspitze gesichert. Um im beheizten Zustand eine vollflächige und kraftschlüssige Anlage der Hülse 1017 zu erreichen, bestehen der Innenzylinder 100 und die Plastifizierschnecke 1' sowie die Hülse 1017 aus Materialien mit unterschiedlichen Wärmeausdehnungskoeeffizienten. Dabei besitzt der Innenzylinder 100 vorzugsweise einen größeren Wärmeausdehnungskoeffizienten als die Plastifizierschnecke 1'. Die Hülse 1017 verfügt dabei vorzugsweise über einen höheren Wärmeausdehnungskoeffizienten als der Innenzylinder 100. Eine längsseitige Ausnehmung oder Aussparung 1010 (vorzugsweise ein Schlitz) erstreckt sich vorzugsweise über mindestens 75% der Länge der Hülse 1017 und unterstützt das Wärmeausdehnungsverhalten. Die Öffnung 1012 (bspw. eine Bohrung) am Ende des längsseitigen Schlitzes verhindert ein komplettes Durch- bzw. Aufreißen der Hülse 1017 unter thermomechanischer Belastung. Der elektrische Anschluss des Heizelementes 101 erfolgt vorzugsweise über zwei Bohrungen im Wirbelauslauf 1014 der Plastifizierschnecke 1', wobei in diese beiden Bohrungen jeweils ein Federkontakt mit elektrischer Isolierung (zur Plastifizierschnecke) eingeschraubt wird. Diese Bohrungen bzw. eingeschraubten Federkontakte sitzen dabei lagegerecht über den Kontaktierungsstellen des Heizelementes und stellen somit über den federbelasteten Kontakt eine elektrische Verbindung dar. Am antriebsseitigen Ende der Plastifizierschnecke sitzt ein Schleif- bzw. Rotationskontakt zur Einspeisung der elektrischen Leistung an das Heizelement. Die Verbindung zwischen dem mit sich drehenden Teil des Schleifrings 1016 und der Federkontakte im Wirbelauslauf der Plastifizierschnecke erfolgt dabei mittels hitzebeständiger Elektroleitungen 1015. Die hitzebeständigen Elektroleitungen 1015 liegen dabei vorzugsweise in einem vor äußeren Einfluss schützenden Nut in Längsrichtung der Plastifizierschnecke 1'.Der Bereich der zuvor beschriebenen Kontaktierungslösung wird dabei von einem staub-, wasser- und schmutzabweisenden Gehäuse und/oder Vergussmasse geschützt und stellt darüber hinaus den elektrischen Schutz nach außen dar.

Der wesentliche Vorteil der Erfindung steckt in der Steigerung des Wirkungsgrads der Heizung. Bedingt durch die Schmelzekanal nahe Positionierung der Heizelemente in der Plastifizierschnecke kann das System deutlich schneller aufgeheizt werden und führt somit zu einem zeitlich geringeren Ausfall beim Wiederanfahren nach einer Produktionsunterbrechung. Darüber hinaus erlaubt die Position der Heizelemente eine schnelle Reaktion auf Systemdriften, z.B. in Form von kleineren Temperaturschwankungen bei Chargenschwankungen des Kunststoffgranulates.

Durch einen vollflächigen Auftrag der Dickschichtheizung bestehen zudem keine Wärmebrücken zwischen einzelnen Heizzonen - dies verhindert mögliche Prozessschwankungen durch eine inhomogene Wärmeverteilung. Ein homogenes Aufschmelzen wird durch die bereits bewährte Außenbeheizung mittels des Plastifizierzylinders und der neuartigen Innenbeheizung durch die Plastifizierschnecke 1' erreicht.

Durch die technische Lösung der innenbeheizten Plastifizierschnecke 1' gelangt nahezu 100% der eingebrachten Heizenergie in das Kunststoffgranulat. Ein thermisches Gleichgewicht im Querschnitt des Schmelzekanal wird dadurch erreicht, dass das Kunststoffgranulat von außen und innen aufgeschmolzen wird. Dies reduziert die Gefahr von unaufgeschmolzenen Kunststoffgranulat und späteren Oberflächenfehlern am Fertigteil. Da sich die Fläche des Heizenergieeintrages durch die Erfindung erhöht, muss das Kunststoffgranulat nicht mehr an der obersten Verarbeitungstemperatur und ggf. darüber aufgeschmolzen werden. Zur Erreichung kürzester Plastifizierzeiten und somit Zykluszeiten ist dies bislang gängige Praxis und schadet den Materialeigenschaften - es findet u.U. ein thermischer Abbau des Materials statt.

Da die Verarbeitungstemperaturen durch den schnelleren und homogeneren Wärmeeintrag gesenkt werden können ist eine geringe Abkühlzeit und schnelleres Erreichen der Entformungstemperatur des Fertigteils möglich die wiederum zu schnelleren Zykluszeiten und einem erhöhten Output führt.

Der homogene Wärmeeintrag führt dazu, dass die Schneckendrehzahl und der Staudruck der Maschine reduziert werden können. Der Wert dieser beiden Parameter hat u.a. Einfluss auf den Friktionswärmeeintrag in die Kunststoffschmelze.

Um eine fehlende Heizleistung der Zylinderbeheizung ausgleichen zu können und um eine homogenere Kunststoffschmelze zu erreichen, werden diese Parameter bei konventionell beheizten Systemen in der Regel höher gewählt. Eine höhere Schneckendrehzahl als auch ein höherer Staudruck wirken sich jedoch negativ auf den Verschleiß der Antriebseinheit der Plastifizierschnecke und den Energiebedarf aus.

Stehen auf der Maschine Farb- und/ oder Materialwechsel an, kommen zur Reinigung des Systems chemische oder physikalische Schneckenreiniger zum Einsatz. Diese erzielen durch chemische Reaktion oder abrasive Wirkung eine Reinigungsleistung auf der Schnecke und lösen hier vorhandene Ablagerung der vorherigen Produktion. Durch den Einsatz der beheizten Plastifizierschnecke 1' kann zukünftig auf solche Reiniger verzichtet werden, da die Ablagerungen durch eine erhöhte Temperierung der Plastifizierschnecke gelöst werden können.

Eine Isolierung aus Aerogel hält die eingebrachte Energie/ Temperatur im System der Plastifiziereinheit und reduziert hier nicht nur den Energieeintrag, sondern vor allem die bisher bekannten Abwärmeverluste. Durch diesen Umstand ist für eine prozessstabile Produktion ggf. auch keine Klimatisierung der Fertigungshalle bzw. des Produktionsumfeldes mehr erforderlich.

Ein gekapselter Aufbau mittels Edelstahlblechummantelung schützt die darunterliegende Isolierung vor möglichen Überspritzungen und macht einen Austausch der Isolierung und weiterer Funktionselemente (z.B. Temperaturfühler und Kontaktierung) im Havariefall überflüssig.

Sollte es zu einem Defekt der Heizelemente kommen lassen sich diese getrennt von der Plastifizierschnecke 1' austauschen - bereits bestehende Plastifiziersysteme lassen sich durch eine Nachbearbeitung nachrüsten.

Durch das effektivere Aufschmelzen des Kunststoffgranulates ist die Verkürzung der Plastifiziereinheit denkbar und beansprucht hierdurch weniger Material (Stahl) und Produktionsfläche zum Aufstellen der Maschine.

### Liste der Bezugsziffern

- 1': Plastifizierschnecke
- 10: Temperiervorrichtung
- 11: Hohlzylinder
- 100: Innenzylinder der Temperiervorrichtung
- 101: Heizelement
- 110: zentraler Hohlraum des Hohlzylinders
- 1000: Mantelfläche des Innenzylinders
- 1010: Ausnehmung oder Aussparung
- 1011: elektrische Anschlüsse
- 1012: Öffnung
- 1013: Sicherungsstift
- 1014: Wirbelauslauf
- 1015: Elektroleitungen
- 1016: Schleifring
- 1017: Hülse
- L: Längsrichtung

## Patentansprüche

1. Plastifizierschnecke (1') mit einer Temperiervorrichtung (10) , wobei die Plastifizierschnecke (1') aus einem Hohlzylinder (11) besteht, in dessen zentralen Hohlraum (110) die Temperiervorrichtung (10) zum Temperieren der Plastifizierschnecke (1') aufgenommen ist und wobei die Temperiervorrichtung (10) aus einem Innenzylinder (100) zur Aufnahme in dem Hohlzylinder (11) gebildet ist, **dadurch gekennzeichnet, dass** auf dessen außenseitiger Mantelfläche (1000) wenigstens ein flächig ausgebildetes Heizelement (101) aufgebracht ist, wobei dass das flächig ausgebildete Heizelement (101) aus einer Hülse (1017) gebildet ist, die auf der außenseitigen Mantelfläche (1000) des Innenzylinders aufgebracht ist.

2. Plastifizierschnecke (1') nach Anspruch 1,
**dadurch gekennzeichnet, dass**
das mindestens eine flächig ausgebildete Heizelement (101) mindestens einen elektrischen Widerstands-Heizleiter zum Umwandeln elektrischer Energie in Wärme mit wenigstens zwei elektrischen Anschlüssen (1011) umfasst, die in einem Anschlussbereich kontaktierbar sind.

3. Plastifizierschnecke (1') nach Anspruch 1 oder 2,
**dadurch gekennzeichnet, dass**
das mindestens eine flächig ausgebildete Heizelement (101) als Dickschichtheizer ausgebildet ist.

4. Plastifizierschnecke (1') nach einem der vorangegangenen Ansprüche,
**dadurch gekennzeichnet, dass**
der Widerstands-Heizleiter mittels einer elektrischen Widerstandspaste auf dem Innenzylinder (100) oder der Hülse (1017) des Heizelements (101) aufgedruckt ist.

5. Plastifizierschnecke (1') nach einem der vorangegangenen Ansprüche,
**dadurch gekennzeichnet, dass**
eine Dielektrikumschicht auf die Mantelfläche (1000) des Innenzylinders (100) oder die Hülse (1017) aufgebracht ist.

6. Plastifizierschnecke (1') nach einem der vorangegangenen Ansprüche,
**dadurch gekennzeichnet, dass**
an dem flächig ausgebildeten Heizelement (101) mindestens eine sich in Längsrichtung (L) des Heizelements (101) erstreckende Ausnehmung oder Aussparung (1010) ausgebildet ist.

7. Plastifizierschnecke (1') nach Anspruch 6,
**dadurch gekennzeichnet, dass**
sich die Ausnehmung oder Aussparung (1010) über mindestens ca. 75% der Länge des Heizelements (101) erstreckt.

8. Plastifizierschnecke (1') nach Anspruch 6 oder 7,
**dadurch gekennzeichnet, dass**
die Ausnehmung oder Aussparung (1010) schlitzartig ausgebildet ist.

9. Plastifizierschnecke nach einem der vorangegangenen Ansprüche 6 bis 8,
**dadurch gekennzeichnet, dass**
sich endseitig der Ausnehmung oder Aussparung (1010) an dem Heizelement (101) eine Öffnung (1012) ausgebildet ist, deren Durchmesser größer ist als die Breite der Ausnehmung oder Aussparung (1010).

## Claims

1. Plasticising screw (1') with a temperature control device (10), wherein the plasticising screw (1') comprises a hollow cylinder (11), in whose central cavity (110) the temperature control device (10) for controlling the temperature of the plasticising screw (1') is accommodated, and wherein the temperature control device (10) is formed from an inner cylinder (100) for accommodation in the hollow cylinder (11),
**characterised in that**
at least one flat heating element (101) is applied to its outer surface (1000), wherein the flat heating element (101) is formed from a sleeve (1017) which is applied to the outer surface (1000) of the inner cylinder.

2. Plasticising screw (1') according to claim 1,
**dadurch gekennzeichnet, dass**
the at least one flat heating element (101) comprises at least one electrical resistance heating conductor for converting electrical energy into heat with at least two electrical connections (1011) which can be contacted in a connection area.

3. Plasticising screw (1') according to claim 1 or 2,
**characterised in that**
the at least one flat heating element (101) is designed as a thickfilm heater.

4. Plasticising screw (1') according to one of the preceding claims, **characterised in that**
the resistance heating conductor is printed onto the inner cylinder (100) or the sleeve (1017) of the heating element (101) by means of an electrical resistance paste.

5. Plasticising screw (1') according to one of the preceding claims, **characterised in that**
a dielectric layer is applied to the outer surface (1000) of the inner cylinder (100) or the sleeve (1017).

6. Plasticising screw (1') according to one of the preceding claims, **characterised in that**
at least one recess or cut-out (1010) extending in the longitudinal direction (L) of the heating element (101) is formed on the flat heating element (101).

7. Plasticising screw (1') according to claim 6,
**characterised in that**
the recess or cut-out (1010) extends over at least approx. 75% of the length of the heating element (101).

8. Plasticising screw (1') according to claim 6 or 7,
**characterised in that**
the recess or cut-out (1010) is slotted.

9. Plasticising screw (1') according to one of the preceding claims 6 to 8,
**characterised in that**
an opening (1012) is formed at the end of the recess or cut-out (1010) on the heating element (101), the diameter of which is greater than the width of the recess or cut-out (1010).

## Revendications

1. Vis de plastification (1') avec dispositif de régulation de température (10), la vis de plastification (1') étant constituée d'un cylindre creux (11) dont la cavité centrale (110) reçoit le dispositif de régulation de température (10) destiné à réguler la température de la vis de plastification (1'), le dispositif de régulation de température (10) étant constitué d'un cylindre intérieur (100) destiné à être logé dans le cylindre creux (11),
**caractérisée en ce que**
at least one flat heating element (101) is applied to its outer surface (1000), wherein the flat heating element (101) is formed from a sleeve (1017) which is applied to the outer surface (1000) of the inner cylinder.

2. Vis de plastification (1') selon la revendication 1,
**caractérisée en ce que**
le au moins un élément chauffant plat (101) comprend au moins un conducteur chauffant à résistance électrique pour convertir l'énergie électrique en chaleur, avec au moins deux connexions électriques (1011) qui peuvent être mises en contact dans une zone de connexion.

3. Vis de plastification (1') selon la revendication 1 ou 2,
**caractérisée en ce que**
le ou les éléments chauffants plats (101) sont conçus comme des éléments chauffants à couche épaisse.

4. Vis de plastification (1') selon l'une des revendications précédentes,
**caractérisée en ce que**
le conducteur chauffant à résistance est imprimé au moyen d'une pâte à résistance électrique sur le cylindre intérieur (100) ou le manchon (1017) de l'élément chauffant (101).

5. Vis de plastification (1') selon l'une des revendications précédentes,
**caractérisée en ce que**
une couche diélectrique est appliquée sur la surface d'enveloppe (1000) du cylindre intérieur (100) ou sur le manchon (1017).

6. Vis de plastification (1') selon l'une des revendications précédentes,
**caractérisée en ce que**
au moins un évidement ou une encoche (1010) s'étendant dans le sens longitudinal (L) de l'élément chauffant (101) est formé sur l'élément chauffant (101) de forme plane.

7. Vis de plastification (1') selon la revendication 6,
**caractérisée en ce que**
l'évidement ou le renfoncement (1010) s'étend sur au moins environ 75 % de la longueur de l'élément chauffant (101).

8. Vis de plastification (1') selon la revendication 6 ou 7,
**caractérisée en ce que**
l'évidement ou le renfoncement (1010) est réalisé sous forme de fente.

9. Vis de plastification (1') selon l'une des revendications précédentes 6 à 8,
**caractérisée en ce que**
une ouverture (1012) est formée à l'extrémité de l'évidement ou de la cavité (1010) sur l'élément chauffant (101), dont le diamètre est supérieur à la largeur de l'évidement ou de la cavité (1010).
